# FASCICULE DE BREVET EUROPEEN

(11) **EP 1 304 784 B1**
(45) Date de publication et mention de la délivrance du brevet: **30.09.2015**
(21) Numéro de dépôt: 02292454.2
(22) Date de dépôt: 04.10.2002
(51) Int. Cl.: H02G 3/10

(54) **Boitier à disposer à coté d'une goulotte de cheminement de cables ou de conducteurs électriques**
Dose zur Montage entlang einem Kabel- oder Leitungskanal
Box to be placed alongside a cable or electrical wiring duct

(30) Priorité: 22.10.2001 FR 0113590
(43) Date de publication de la demande: 23.04.2003
(73) Titulaire: Legrand France, 87000 Limoges (FR); Legrand SNC, 87000 Limoges (FR)
(72) Inventeur: Adam, Damien, 72240 Domfront En Champagne (FR)
(74) Mandataire: Santarelli

(56) Documents cités:
- EP-A- 0 239 456
- EP-A- 0 633 639

## Description

La présente invention concerne un boîtier à disposer à côté d'une goulotte de cheminement de câbles ou de conducteurs électriques, comportant, d'une part, un cadre qui présente, dans un de ses côtés, par lequel il doit côtoyer la goulotte, une ouverture, et, d'autre part, un auvent qui, s'étendant à compter du cadre en correspondance avec ladite ouverture de celui-ci, est destiné à recouvrir localement la goulotte.

On entend ici par le terme "boîtier" toutes sortes de boîtiers, notamment un boîtier destiné à loger un appareillage électrique ou un boîtier formant une dérivation, ou encore un embout de goulotte.

On connaît déjà des documents GM 89 14 663, EP 0 663 639, FR 2 595 513 et WO 00/33435 des boîtiers du type précité.

Selon le document GM 89 14 663, l'auvent du boîtier est une seule pièce en matériau souple du type caoutchouc qui comporte des moyens de montage dans l'ouverture prévue dans le côté du cadre du boîtier.

Selon les documents EP 0 633 639 et FR 2 595 513, l'auvent est une seule pièce rigide à rapporter par une coopération de languettes et d'encoches sur le cadre du boîtier au niveau de son ouverture.

Enfin, selon le document WO 00/33435, l'auvent est réalisé en deux parties pouvant être échelonnées en longueur dans la largeur ou hauteur de la goulotte, à savoir, à compter du cadre du boîtier, une partie fixe qui est solidaire de ce cadre et au moins une partie mobile rigide, qui est en prise par une coopération de rainures et de nervures avec ladite partie fixe, et qui est ajustable en position par rapport à celle-ci.

L'inconvénient principal des boîtiers précités est que l'auvent qu'ils portent présente toujours une orientation fixe par rapport aux côtés du cadre et, de ce fait, ne peut pas toujours être bien ajusté sur le socle de la goulotte qu'il doit recouvrir.

Afin de résoudre l'inconvénient précité, la présente invention propose un nouveau boîtier dans lequel l'auvent est une pièce rigide reliée par une liaison formant charnière d'articulation à une partie rigide fixe solidaire du cadre du boîtier.

Ainsi, avantageusement, l'inclinaison de l'auvent par rapport aux côtés du cadre du boîtier peut varier pour permettre un ajustement correct de l'auvent sur le socle de la goulotte.

D'autres caractéristiques non limitatives et avantageuses du boîtier selon l'invention sont les suivantes :
- ladite partie rigide fixe à laquelle est relié l'auvent est rapportée sur une paroi latérale dudit cadre ;
- ladite partie rigide fixe à laquelle est relié l'auvent vient de formation avec la paroi latérale dudit cadre ;
- la liaison formant charnière d'articulation de l'auvent sur ladite partie rigide fixe est constituée par un film souple venant de formation avec l'auvent et ladite partie rigide fixe ;
- ladite liaison formant charnière d'articulation de l'auvent sur ladite partie rigide fixe est réalisée par la coopération d'un axe et d'un logement cylindrique dit palier ;
- l'auvent porte une plaquette qui est apte à se positionner au travers du socle de la goulotte lorsque ledit auvent est placé à la verticale du plan sur lequel est rapportée ladite goulotte afin de former une butée pour un bord d'extrémité d'un couvercle de fermeture du socle de la goulotte ;
- la plaquette vient de formation avec l'auvent et est rattachée à celui-ci par l'intermédiaire d'une liaison formant charnière d'articulation ;
- la charnière d'articulation prévue entre ladite plaquette et l'auvent est réalisée par une pliure courant le long de ladite plaquette ;
- l'auvent comprend, sur sa face intérieure, des moyens de montage sur les ailes latérales du socle de la goulotte ;
- lesdits moyens de montage de l'auvent comprennent des moyens d'encliquetage similaires à ceux du couvercle de fermeture ; et
- la partie rigide fixe à laquelle est relié l'auvent présente la forme d'une arche avec deux jambages et une poutre transversale reliant les deux jambages, les deux jambages étant pourvus chacun d'une glissière destinée à s'enfiler sur un bord de l'ouverture de la paroi latérale correspondante dudit cadre.

La description qui va suivre en regard des dessins annexés, donnés à titre d'exemples non limitatifs, fera bien comprendre en quoi consiste l'invention et comment elle peut être réalisée.

Sur les dessins annexés :
- les figures 1 à 3 sont des vues schématiques en perspective d'un mode de réalisation du boîtier selon l'invention dans trois positions différentes de l'auvent par rapport au socle d'une goulotte;
- la figure 4 est une vue schématique en perspective du boîtier représenté sur les figures 1 à 3 sans l'auvent ;
- la figure 5 est une vue schématique de côté de la figure 3 ;
- la figure 6 est une vue schématique de côté d'un autre boîtier selon l'invention comportant un auvent identique à celui représenté sur les figures 1 à 3 ;
- les figures 7 et 8 représentent l'auvent du boîtier selon l'invention vu en perspective dans deux positions, à savoir une position relevée et une position abaissée ; et
- la figure 9 est une vue arrière de l'auvent représenté sur la figure 8.

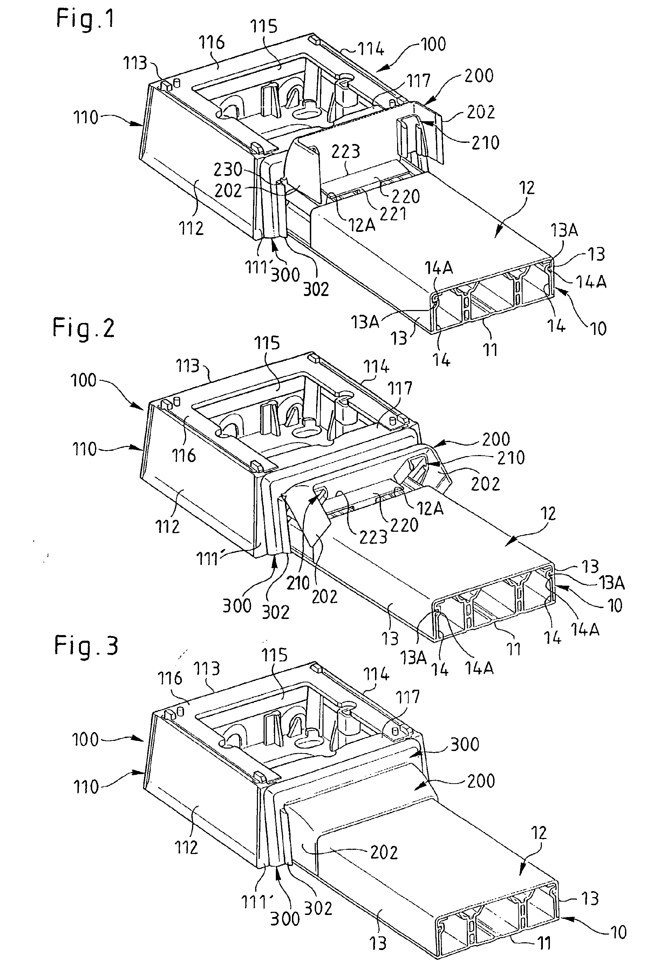

Sur les figures 1 à 5, on a représenté un boîtier 100 à disposer à côté d'une goulotte 10 de cheminement de câbles ou de conducteurs électriques.

Ici, le boîtier 100 est placé au bout d'une goulotte 10 qui est une moulure.

Cette goulotte 10, connue en soi, présente un socle 11 de section transversale en U avec deux ailes latérales 14 pourvues chacune dans leur partie supérieure de moyens de montage d'un couvercle de fermeture 12.

Ici, le couvercle de fermeture 12 comporte des ailes latérales 13 recouvrant les faces externes des ailes latérales 14 du socle 11 de la goulotte 10.

Les moyens de montage du couvercle de fermeture 12 sur le socle 11 de la goulotte 10 sont classiques et comprennent, sur chaque face interne de chaque aile latérale 13 du couvercle de fermeture 12, une nervure 13A longitudinale apte à s'encliqueter dans une rainure 14A prévue en renfoncement de la face externe de l'aile latérale 14 correspondante du socle 11 de la goulotte.

La goulotte 10 ne fait pas partie à proprement parler de la présente invention, et elle ne sera pas ici décrite plus dans le détail.

Le boîtier 100 représenté sur les figures 1 à 5 est ici un boîtier d'appareillage électrique permettant de loger un appareillage électrique non représenté.

Bien entendu, selon d'autres modes de réalisation non représentés, le boîtier 100 peut être un boîtier de dérivation à disposer le long d'un des côtés longitudinaux de la goulotte, ou encore un embout de goulotte.

Le boîtier 100, représenté sur les figures 1 à 5, comporte un cadre 110 qui comprend trois parois latérales 112, 113, 114 d'un seul tenant et une paroi latérale 111 rapportée sur des retours 111' des parois latérales 112, 114.

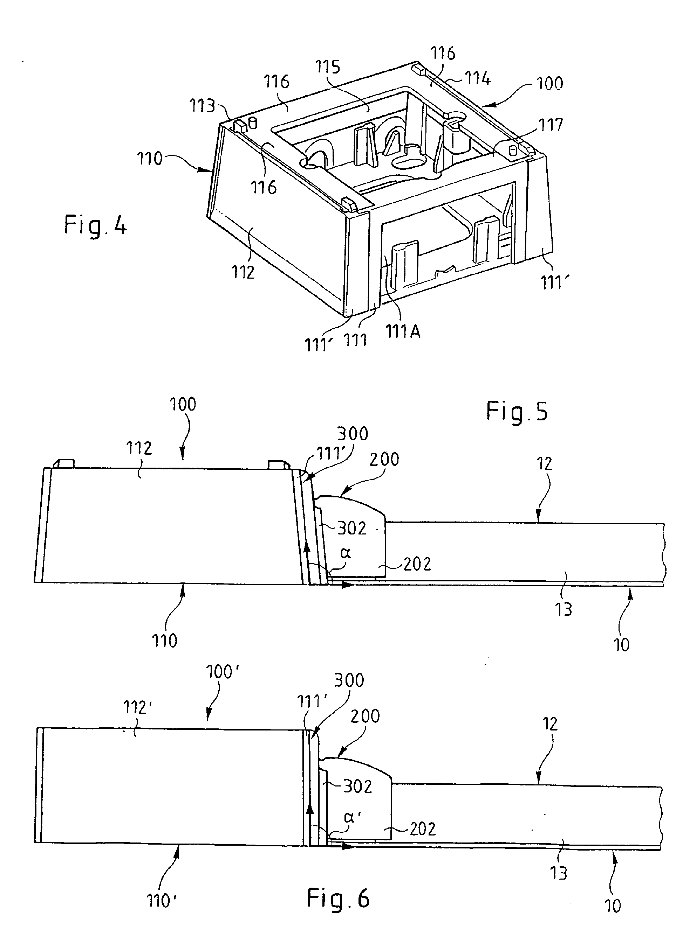

Ce cadre 110 sensiblement rectangulaire repose sur un fond percé de trous pour sa fixation sur une paroi, et ses parois latérales 111, 112, 113, 114 sont légèrement inclinées de sorte qu'elles forment avec le fond du socle 11 de la goulotte 10, une fois que le boîtier 100 est positionné en bout de goulotte, un angle α d'environ 95° ( voir figure 5).

Chaque paroi latérale 111, 112, 113, 114 du cadre 110 comporte un retour à l'équerre 117, 116. Les quatre retours à l'équerre 116, 117 forment un trottoir qui borde l'ouverture 115 du boîtier 100 dans laquelle est monté l'appareillage électrique.

La paroi latérale 111 rapportée sur les retours 111' comporte des lignes de prédécoupe permettant de pratiquer une ouverture 111A dans un des côtés du boîtier 100 par lequel il doit côtoyer la goulotte 10 de sorte que l'espace intérieur du boîtier 100 communique avec l'espace intérieur de la goulotte 10.

Le boîtier 100 comporte en outre un auvent 200 qui, s'étendant à compter du cadre 110 en correspondance avec ladite ouverture 111A de celui-ci, est destiné à recouvrir localement la goulotte 10 (voir figure 3).

De cette manière, une continuité de couvercle est assurée entre le boîtier 100 et la goulotte 10.

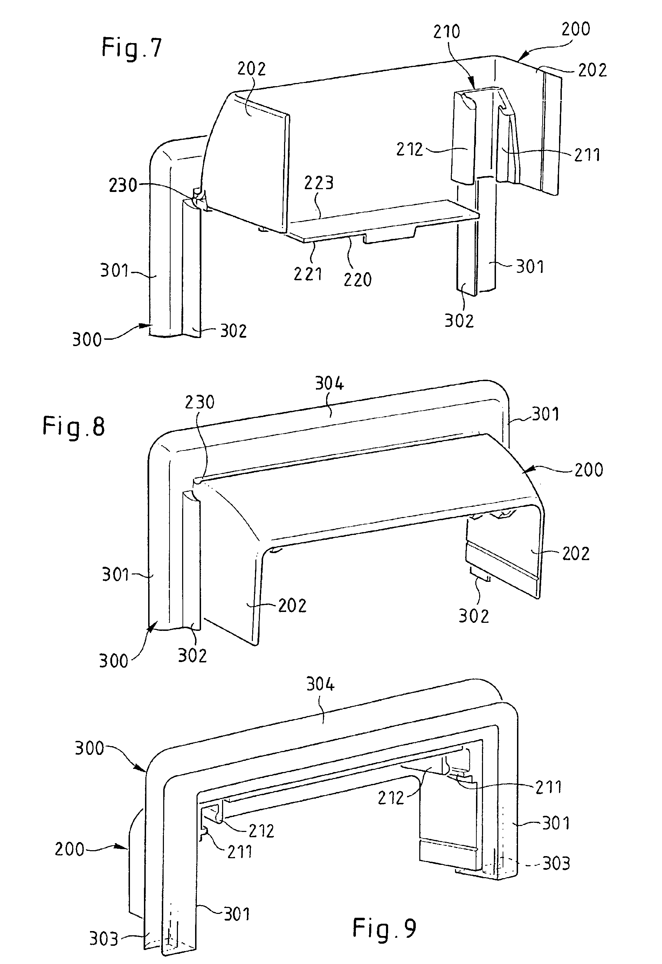

Avantageusement, ledit auvent 200, représenté plus en détail sur les figures 7 à 9, est une pièce rigide reliée par une liaison 230 formant charnière d'articulation à une partie rigide fixe 300 solidaire du cadre 110 du boîtier 100.

Comme le montrent plus particulièrement les figures 7 à 9, ici ladite partie rigide fixe 300 à laquelle est relié l'auvent 200 est une pièce rapportée sur la paroi latérale 111 du cadre 110 du boîtier 100.

Bien entendu, on pourrait prévoir, selon une variante non représentée, que cette partie rigide fixe à laquelle est relié l'auvent vient de formation avec ladite paroi latérale correspondante du cadre du boîtier.

Cette partie rigide fixe 300 à laquelle est relié l'auvent 200 présente, avantageusement, la forme d'une arche avec deux jambages 301 et une poutre 304 transversale reliant les deux jambages 301.

Chaque jambage 301 est ici pourvu d'une glissière 303 (voir figure 9) qui débouche sur un côté du jambage et qui est destinée à s'enfiler sur un bord de l'ouverture 111A prévue dans la paroi latérale 111 dudit cadre 110.

Chaque glissière 303 prévue sur chaque jambage 301 s'étend également sur la poutre 304 de sorte que la partie rigide fixe 300 comporte une glissière 303 unique sur son pourtour qui coopère avec le bord rectangulaire de l'ouverture 111A pratiquée dans la paroi latérale 111 du cadre 110 du boîtier 100.

De cette manière, la partie rigide fixe 300 est solidarisée à la paroi latérale 111 du cadre 110 en entourant l'ouverture 111A dudit cadre 110 et en recouvrant la paroi latérale 111 ainsi qu'une partie des retours 111' du cadre 110 du boîtier 100.

Sur la face avant tournée vers la goulotte 10, chaque jambage 301 comporte en saillie un montant 302 qui s'étend sur la majeure partie de sa longueur.

Selon le mode de réalisation préférentiel représenté sur les figures, la liaison 230 formant charnière d'articulation de l'auvent 200 sur ladite partie rigide fixe 300 est constituée par un film souple venant de formation avec l'auvent 200 et la partie rigide fixe 300.

En fait, l'auvent 200 et la partie rigide fixe 300 forment une seule pièce et sont reliés l'un à l'autre par un film souple formant la charnière d'articulation de l'auvent 200 par rapport à ladite partie rigide fixe 300.

Bien entendu, selon une variante de réalisation non représentée, on pourrait prévoir que cette liaison formant charnière d'articulation de l'auvent sur ladite partie rigide fixe soit réalisée par la coopération de différentes pièces telles qu'un axe et un logement cylindrique dit palier.

Comme le montrent les figures 7 et 8, l'auvent 200 peut prendre globalement deux positions, à savoir une position relevée dans laquelle il s'étend globalement à la verticale du plan sur lequel est rapporté le socle 11 de la goulotte 10 (voir figure 1) et une position abaissée dans laquelle l'auvent 200 est ajusté sur le socle 11 de la goulotte 10 en recouvrant le bord d'extrémité 12A coupé du couvercle de fermeture 12 fermant ladite goulotte 10 (voir figure 3).

Grâce à la charnière d'articulation 230, l'auvent 200 peut prendre différentes inclinaisons par rapport à la paroi latérale 111 du cadre 110 par laquelle ledit boîtier côtoie la goulotte 10 de façon à s'ajuster correctement sur le socle 11 de la goulotte 10 quelle que soit l'orientation de cette paroi latérale 111 par rapport audit socle 11.

Dans la position abaissée, l'auvent 200, qui présente deux parois latérales 202, s'encastre dans la partie rigide fixe 300 de sorte qu'un bord d'extrémité de chaque paroi latérale 202 de l'auvent 200 est recouvert par un montant 302 porté par chaque jambage 301 de la partie rigide fixe 300.

Ce recouvrement des bords d'extrémité des parois latérales 202 de l'auvent 200 permet d'assurer une sécurité et une étanchéité au niveau de l'ouverture 111A de jonction entre l'espace intérieur de la goulotte 10 et l'espace intérieur du boîtier 100.

Comme le montrent plus particulièrement les figures 1, 2 et 7, l'auvent 200 comporte, sur sa face intérieure, à proximité de chaque paroi latérale 202, des moyens de montage 210 sur les ailes latérales 14 du socle 11 de la goulotte 10.

Ces moyens de montage 210 de l'auvent 200 comprennent des moyens d'encliquetage similaires à ceux du couvercle de fermeture 12.

Ici, chaque moyen de montage 210 présente globalement la forme d'un profilé avec, en parallèle, d'une part, un bourrelet d'encliquetage 212 destiné à venir se prendre sous le dos de la rainure 14A correspondante prévue en renfoncement de la face externe de chaque aile latérale 14 du socle 11 de la goulotte 10, et, d'autre part, une nervure longitudinale 211 destinée à venir s'engager dans ladite rainure 14A de la même manière que chaque nervure 13A portée par le couvercle de fermeture 12.

Selon une caractéristique particulièrement avantageuse du boîtier 100, l'auvent 200 porte, sur un bord longitudinal, une plaquette 220, ici de forme globalement rectangulaire, qui est apte à se positionner au travers du socle 11 de la goulotte 10, lorsque ledit auvent 200 est placé à la verticale du plan sur lequel est rapportée la goulotte 10, au niveau de la partie supérieure des ailes latérales du socle 11 de la goulotte, afin de former une butée pour un bord d'extrémité 12A d'un couvercle de fermeture 12 du socle 11 de la goulotte 10.

Ainsi, le bord libre longitudinal 221 de cette plaquette 220 forme un repère de positionnement du bord d'extrémité 12A du couvercle de fermeture 12 du socle de la goulotte, permettant d'ajuster la longueur du couvercle de fermeture 12.

Ici, avantageusement, la plaquette 220 vient de formation avec l'auvent 200 et est rattachée à celui-ci par l'intermédiaire d'une liaison 223 formant charnière d'articulation, réalisée par une pliure courant le long de ladite plaquette 220.

Ainsi, lorsque l'auvent 200 est mis en place sur le socle 11 de la goulotte 10, la plaquette 220 reste en position horizontale au travers du socle 11 de la goulotte 10, et l'auvent 200 peut être rabattu sur ledit socle 11 en s'articulant, d'une part, au niveau de la liaison 230 le reliant à la partie rigide fixe 300, et, d'autre part, au niveau de la pliure 223 le reliant à la plaquette 220.

Comme cela a déjà été explicité précédemment, la liaison 230 formant charnière d'articulation de l'auvent 200 à la partie rigide fixe 300 permet d'ajuster l'auvent 200 correctement sur le socle 11 de la goulotte 10 quelle que soit l'orientation de la partie rigide fixe 300 par rapport à ce socle, cette orientation étant liée à celle de ladite paroi latérale 111 du boîtier 100 par laquelle ce dernier côtoie la goulotte.

En effet, comme le montrent les figures 5 et 6, cette paroi latérale du boîtier peut présenter différentes inclinaisons de sorte que l'angle formé avec le fond du socle de la goulotte peut varier en restant voisin de 90°.

Par exemple, selon le mode de réalisation du boîtier 100 représenté sur la figure 5, ladite paroi latérale 111 du cadre 110 du boîtier forme un angle α de 95° avec le fond du socle 11 de la goulotte 10 et, selon le mode de réalisation du boîtier 100' représenté sur la figure 6, ledit cadre 110' du boîtier 100' comprend des parois latérales 112', 111' qui forment un angle α' de 90° avec le fond du socle de la goulotte 10.

Dans les deux cas précités, l'auvent 200 peut, par sa liaison 230 formant charnière d'articulation, prendre deux inclinaisons légèrement différentes par rapport à la partie rigide fixe 300 solidaire de ladite paroi latérale 111, 111' et s'ajuster sur le socle 11 pour recouvrir correctement le couvercle de fermeture 12 de la goulotte 10.

L'auvent 200 et la partie rigide fixe 300 formant une seule pièce sont réalisés avantageusement par moulage d'une matière plastique tout comme les autres pièces du boîtier 100.

## Revendications

1. Boîtier (100) à disposer à côté d'une goulotte (10) de cheminement de câbles ou de conducteurs électriques, comportant, d'une part, un cadre (110) qui présente dans un des ses côtés (111), par lequel il doit côtoyer la goulotte (10), une ouverture (111A), et, d'autre part, un auvent (200) qui, s'étendant à compter du cadre (110) en correspondance avec ladite ouverture (111A) de celui-ci, est destiné à recouvrir localement la goulotte (10), **caractérisé en ce que** ledit auvent (200) est une pièce rigide reliée par une liaison (230) formant charnière d'articulation à une partie rigide fixe (300) solidaire dudit cadre (110).

2. Boîtier (100) selon la revendication 1, **caractérisé en ce que** ladite partie rigide fixe (300) à laquelle est relié l'auvent (200) est rapportée sur une paroi latérale (111) dudit cadre (110).

3. Boîtier (100) selon la revendication 1, **caractérisé en ce que** ladite partie rigide fixe à laquelle est relié l'auvent vient de formation avec la paroi latérale dudit cadre.

4. Boîtier (100) selon l'une des revendications 1 à 3, **caractérisé en ce que** la liaison (230) formant charnière d'articulation de l'auvent (200) sur ladite partie rigide fixe (300) est constituée par un film souple venant de formation avec l'auvent (200) et ladite partie rigide fixe (300).

5. Boîtier (100) selon l'une des revendications 1 à 3, **caractérisé en ce que** ladite liaison formant charnière d'articulation de l'auvent sur ladite partie rigide fixe est réalisée par la coopération d'un axe et d'un logement cylindrique dit palier.

6. Boîtier (100) selon l'une des revendications 1 à 5, **caractérisé en ce que** l'auvent (200) porte une plaquette (220) qui est apte à se positionner au travers du socle (11) de la goulotte (10) lorsque ledit auvent (200) est placé à la verticale du plan sur lequel est rapportée ladite goulotte (10) afin de former une butée pour un bord d'extrémité (12A) d'un couvercle de fermeture (12) du socle (11) de la goulotte (10).

7. Boîtier (100) selon la revendication 6, **caractérisé en ce que** la plaquette (220) vient de formation avec l'auvent (200) et est rattachée à celui-ci par l'intermédiaire d'une liaison (223) formant charnière d'articulation.

8. Boîtier (100) selon la revendication 7, **caractérisé en ce que** la charnière d'articulation (223) prévue entre ladite plaquette (220) et l'auvent (200) est réalisée par une pliure courant le long de ladite plaquette (220).

9. Boîtier (100) selon l'une des revendications 1 à 8, **caractérisé en ce que** l'auvent (200) comprend, sur sa face intérieure, des moyens de montage (210) sur les ailes latérales (14) du socle (11) de la goulotte (10).

10. Boîtier (100) selon la revendication 9, **caractérisé en ce que** lesdits moyens de montage (210) de l'auvent (200) comprennent des moyens d'encliquetage similaires à ceux du couvercle de fermeture (12).

11. Boîtier (100) selon l'une des revendications 1 à 10, **caractérisé en ce que** la partie rigide fixe (300) à laquelle est relié l'auvent (200) présente la forme d'une arche avec deux jambages (301) et une poutre transversale (304) reliant les deux jambages (301), les deux jambages (301) étant pourvus chacun d'une glissière (303) destinée à s'enfiler sur un bord de l'ouverture (111A) de la paroi latérale (111) correspondante dudit cadre (110).

## Patentansprüche

1. Dose (100) zum Anordnen entlang einem Kabel- oder Leiterkanal, umfassend einerseits einen Rahmen (110), der in einer seiner Seiten (111), über die er an den Kanal (10) angrenzen soll, eine Öffnung (111A) aufweist, und andererseits eine Schutzabdeckung (200), die, indem sie sich von dem Rahmen (110) aus in Übereinstimmung mit der Öffnung (111A) desselben erstreckt, dazu gedacht ist, den Kanal (10) stellenweise abzudecken, **dadurch gekennzeichnet, dass** die Schutzabdeckung (200) ein starres Stück ist, das über eine Gelenkscharnierverbindung (230) mit einem festen starren Teil (300) verbunden ist, der mit dem Rahmen (110) einstückig ist.

2. Dose (100) nach Anspruch 1, **dadurch gekennzeichnet, dass** der feste starre Teil (300), mit dem die Schutzabdeckung (200) verbunden ist, an einer Seitenwand (111) des Rahmens (110) angesetzt ist.

3. Dose (100) nach Anspruch 1, **dadurch gekennzeichnet, dass** der feste starre Teil, mit dem die Schutzabdeckung verbunden ist, mit der Seitenwand des Rahmens einstückig geformt ist.

4. Dose (100) nach einem der Ansprüche 1 bis 3, **dadurch gekennzeichnet, dass** die Gelenkscharnierverbindung (230) der Schutzabdeckung (200) auf dem festen starren Teil (300) aus einer biegsamen Folie besteht, die mit der Schutzabdeckung (200) und dem festen starren Teil (300) einstückig geformt ist.

5. Dose (100) nach einem der Ansprüche 1 bis 3, **dadurch gekennzeichnet, dass** die Gelenkscharnierverbindung der Schutzabdeckung auf dem festen starren Teil durch die Zusammenwirkung einer Achse und einer zylindrischen so genannten Lageraufnahme ausgebildet ist.

6. Dose (100) nach einem der Ansprüche 1 bis 5, **dadurch gekennzeichnet, dass** die Schutzabdeckung (200) eine Platte (220) trägt, die in der Lage ist, sich quer zum Sockel (11) des Kanals (10) zu positionieren, wenn die Schutzabdeckung (200) senkrecht zur Ebene angeordnet ist, auf welcher der Kanal (10) angesetzt ist, um einen Anschlag für einen Endrand (12A) eines Verschlussdeckels (12) des Sockels (11) des Kanals (10) zu bilden.

7. Dose (100) nach Anspruch 6, **dadurch gekennzeichnet, dass** die Platte (220) mit der Schutzabdeckung (200) einstückig geformt ist und über eine Gelenkscharnierverbindung (223) daran angesetzt ist.

8. Dose (100) nach Anspruch 7, **dadurch gekennzeichnet, dass** das Gelenkscharnier (223), das zwischen der Platte (220) und der Schutzabdeckung (200) bereitgestellt wird, durch einen Falz ausgebildet ist, der entlang der Platte (220) verläuft.

9. Dose (100) nach einem der Ansprüche 1 bis 8, **dadurch gekennzeichnet, dass** die Schutzabdeckung (200) auf ihrer Innenseite Montagemittel (210) auf den Seitenflügeln (14) des Sockels (11) des Kanals (10) umfasst.

10. Dose (100) nach Anspruch 9, **dadurch gekennzeichnet, dass** die Montagemittel (210) der Schutzabdeckung (200) Einrastmittel ähnlich wie die des Verschlussdeckels (12) umfassen.

11. Dose (100) nach einem der Ansprüche 1 bis 10, **dadurch gekennzeichnet, dass** der feste starre Teil (300), mit dem die Schutzabdeckung (200) verbunden ist, die Form eines Bogens mit zwei Pfosten (301) und einem Querbalken (304), der die beiden Pfosten (301) verbindet, aufweist, wobei die beiden Pfosten (301) jeweils mit einer Gleitschiene (303) versehen sind, die dazu gedacht ist, auf einen Rand der Öffnung (111A) der entsprechenden Seitenwand (111) des Rahmens (110) aufgeschoben zu werden.

## Claims

1. A housing (100) to be placed alongside a duct (10) for guiding cables or electrical conductors, including on the one hand a frame (110), which, in one of the sides (111) thereof by which it must cooperate with the duct (10), has an opening (111 A), and on the other hand a canopy (200) that extends from the frame (110), matching said opening (111 A) therein, and is intended to cover the duct (10) locally, **characterised in that** said canopy (200) is a rigid part that is joined by a connection piece (230) forming an articulation hinge to a fixed rigid part (300) that is fitted solidarily with said frame (110).

2. A housing (100) according to Claim 1, **characterised in that** said fixed rigid part (300) to which the canopy (200) is joined is mounted on a side wall (111) of said frame (110).

3. A housing (100) according to Claim 1, **characterised in that** said fixed rigid part to which the canopy is joined is integrally formed with the side wall of said frame.

4. A housing (100) according to one of Claims 1 to 3, **characterised in that** the connection piece (230) forming a hinge that articulates the canopy (200) to said fixed rigid part (300) is formed by a flexible film that is integrally formed with the canopy (200) and said fixed rigid part (300).

5. A housing (100) according to one of Claims 1 to 3, **characterised in that** said connection piece forming a hinge that articulates the canopy to said fixed rigid part is created by cooperation between a pin and a cylindrical receiver called a bearing.

6. A housing (100) according to one of Claims 1 to 5, **characterised in that** the canopy (200) carries a small plate (220) which is suitable for being positioned transversely in relation to the base (11) of the duct (10) when said canopy (200) is placed perpendicular to the plane in which said duct (10) is mounted, in order to form an abutment for an end edge (12A) of a closing cover (12) of the base (11) of the duct (10).

7. A housing (100) according to Claim 6, **characterised in that** the small plate (220) is integrally formed with the canopy (200) and is attached to the latter by way of a connection piece (223) forming an articulation hinge.

8. A housing (100) according to Claim 7, **characterised in that** the articulation hinge (223) provided between said small plate (220) and the canopy (200) is formed by a fold extending along said small plate (220).

9. A housing (100) according to one of Claims 1 to 8, **characterised in that** the canopy (200) comprises, on its inner face, means (210) for mounting it on the side wings (14) of the base (11) of the duct (10).

10. A housing (100) according to Claim 9, **characterised in that** said means (210) for mounting the canopy (200) comprise snap-in means similar to those of the closing cover (12).

11. A housing (100) according to one of Claims 1 to 10, **characterised in that** the fixed rigid part (300) to which the canopy (200) is joined is in the shape of an arch having two limbs (301) and a cross piece (304) that joins the two limbs (301), the two limbs (301) each being provided with a slide way (303) that is intended to slip over an edge of the opening (111A) in the corresponding side wall (111) of said frame (110).
